# EUROPÄISCHE PATENTSCHRIFT

(11) **EP 2 098 831 B1**
(45) Veröffentlichungstag und Bekanntmachung des Hinweises auf die Patenterteilung: **29.05.2013**
(21) Anmeldenummer: 09003139.4
(22) Anmeldetag: 04.03.2009
(51) Int. Cl.: G01D 11/24, G01D 11/30, B60S 1/08

(54) **Sensor mit Halterung**
Sensor with holder
Capteur doté d'un support

(30) Priorität: 06.03.2008 DE 202008003168 U
(43) Veröffentlichungstag der Anmeldung: 09.09.2009
(73) Patentinhaber: TRW Automotive Electronics & Components GmbH, 78315 Radolfzell (DE)
(72) Erfinder: Wohlfahrt, Karl-Heinz, 78351 Bodman-Ludwigshafen (DE); Wasetzki, Maxim, 78224 Singen (DE)
(74) Vertreter: Prinz & Partner

(56) Entgegenhaltungen:
- WO-A1-01/05636
- US-A- 2 779 616
- US-A- 4 691 840

## Beschreibung

Die Erfindung betrifft eine Baugruppe mit einer Halterung und einem Sensor, insbesondere einem Regen/Licht-Sensor für ein Kraftfahrzeug.

Es sind verschiedene Baugruppen bestehend aus einer Halterung und einem solchen Sensor bekannt. Die wesentliche Funktion dieser Baugruppe besteht darin, eine solche Befestigung des Sensors an der Halterung und damit an der Windschutzscheibe eines Kraftfahrzeugs zu ermöglichen, dass eine einfache und zuverlässige Befestigung einerseits und andererseits gegebenenfalls ein Austausch des Sensors möglich ist. Insbesondere muss die Baugruppe gewährleisten, dass der Sensor mit einer gewissen Vorspannung in der Halterung befestigt wird.

Die Aufgabe der Erfindung besteht darin, eine solche Baugruppe bereitzustellen.

Zur Lösung dieser Aufgabe ist erfindungsgemäß eine Baugruppe mit einer Halterung und einem Sensor vorgesehen, insbesondere einem Regen/Licht-Sensor für ein Kraftfahrzeug, wobei die Halterung mindestens zwei Widerlager für einen Klemmbügel aufweist und wobei am Sensor mindestens ein Klemmbügel an zwei Lagerstellen schwenkbar angebracht ist, wobei der Klemmbügel zwischen einer Montagestellung und einer Klemmstellung schwenkbar ist, in der er den Sensor mit einer Vorspannkraft gegen die Halterung beaufschlagt. Insbesondere der Klemmbügel ermöglicht es, den Sensor mit geringem Aufwand unter Vorspannung in der Halterung anzubringen.

Die Erfindung wird nachfolgend anhand zweier Ausführungsformen beschrieben, die in den beigefügten Zeichnungen dargestellt ist. In diesen zeigen:
- Figur 1 eine Explosionsansicht einer Baugruppe gemäß einer ersten Ausführungsform der Erfindung;
- Figur 2 eine weitere Explosionsansicht dieser Baugruppe;
- Figur 3 die Baugruppe von Figur 2, wobei der Sensor in die Halterung eingesetzt ist;
- Figur 4 die Baugruppe von Figur 3 in einer vorverrasteten Stellung im Anlieferzustand;
- Figur 5 die Baugruppe von Figur 4 verrastet bei der Endmontage zur Vorfixierung;
- Figur 6 eine Draufsicht auf die Baugruppe im fertig montierten Zustand;
- Figur 7 eine Unteransicht der montierten Baugruppe;

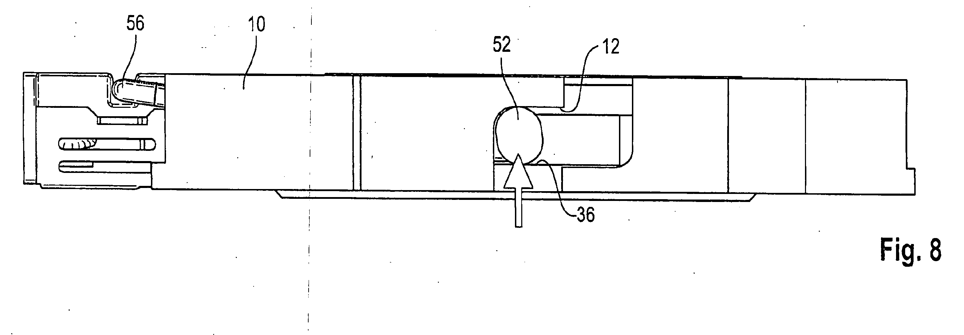

- Figur 8 eine Seitenansicht der montierten Baugruppe;
- Figur 9 eine Explosionsansicht einer Baugruppe gemäß einer zweiten Ausführungsform der Erfindung;
- Figur 10 die Baugruppe von Figur 9 mit vormontierten Klemmbügeln;
- Figur 11 eine Draufsicht auf die Baugruppe von Figur 9 im vorverrasteten Zustand;
- Figur 12 eine perspektivische Ansicht der Baugruppe von Figur 11;

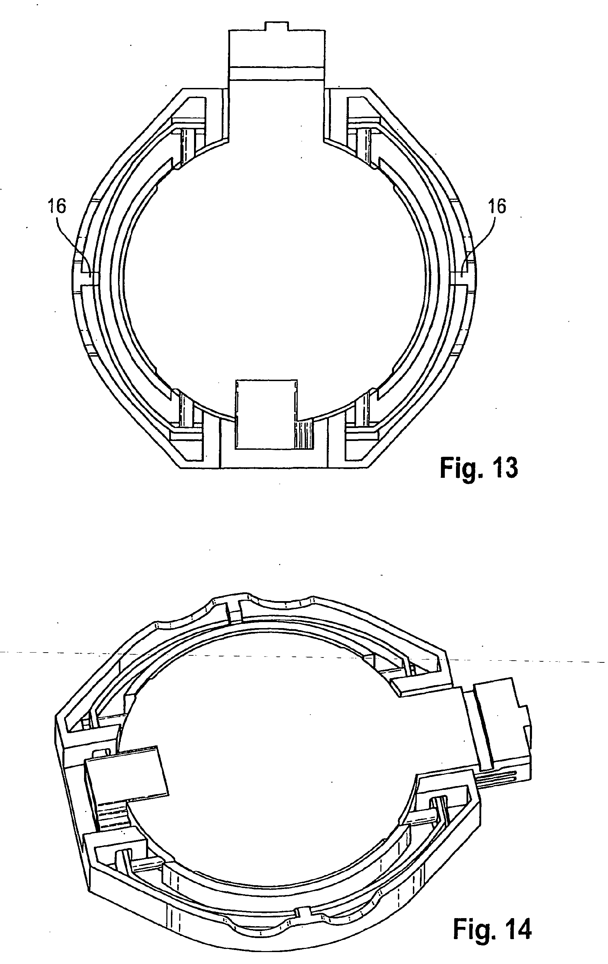

- Figur 13 eine Draufsicht auf die Baugruppe von Figur 9 im montierten Zustand;
- Figur 14 eine perspektivische Ansicht der montierten Baugruppe; und
- Figur 15 eine Seitenansicht der montierten Baugruppe.

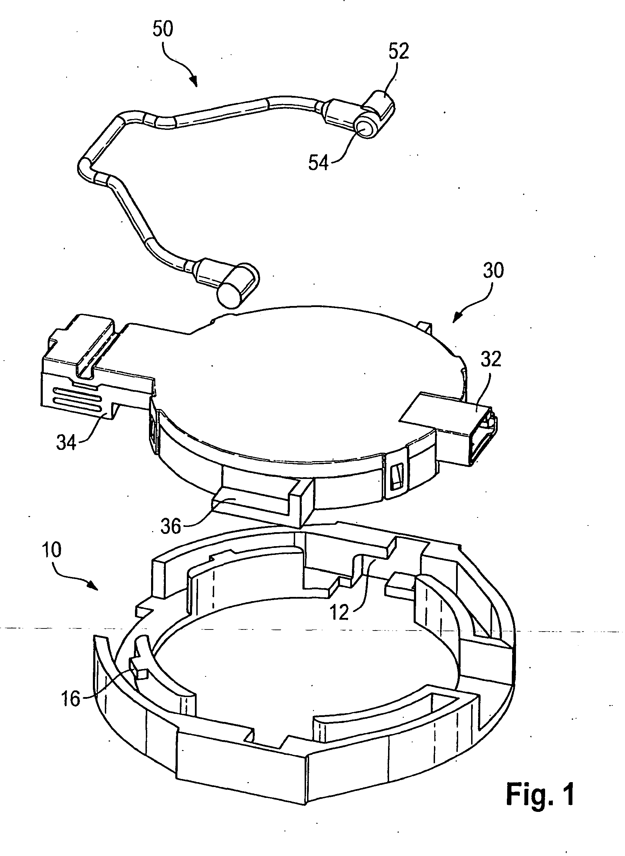

In den Figuren 1 bis 3 ist eine Baugruppe gemäß einer ersten Ausführungsform gezeigt, die als wesentliche Bauteile eine Halterung 10, einen Sensor 30 und einen Klemmbügel 50 enthält.

Die Halterung 10 ist ein im wesentlichen ringförmiger Rahmen, der mittig einen Aufnahmeraum für den Sensor 30 aufweist. Die Halterung 10 weist zwei Widerlagerflächen 12 auf, an denen der Klemmbügel 50 angreifen kann.

Der Sensor 30 ist ein Regen/Licht-Sensor, der an einer Seite einen Steckanschluss 32 und an der anderen Seite einen Feuchte/Temperatur-Sensor 34 aufweist. Der eigentliche Regen/Licht-Sensor ist mittig im Sensorkörper angebracht. Der Sensor 30 weist an zwei einander gegenüberliegenden Seiten Klemmflächen 36 auf, die an seitlich überstehenden Klemmvorsprüngen ausgebildet sind.

Der Klemmbügel 50 ist hier als Drahtbügel ausgebildet und weist an seinen Enden zwei Exzenter 52 auf, die über eine Lagerachse 54 überstehen.

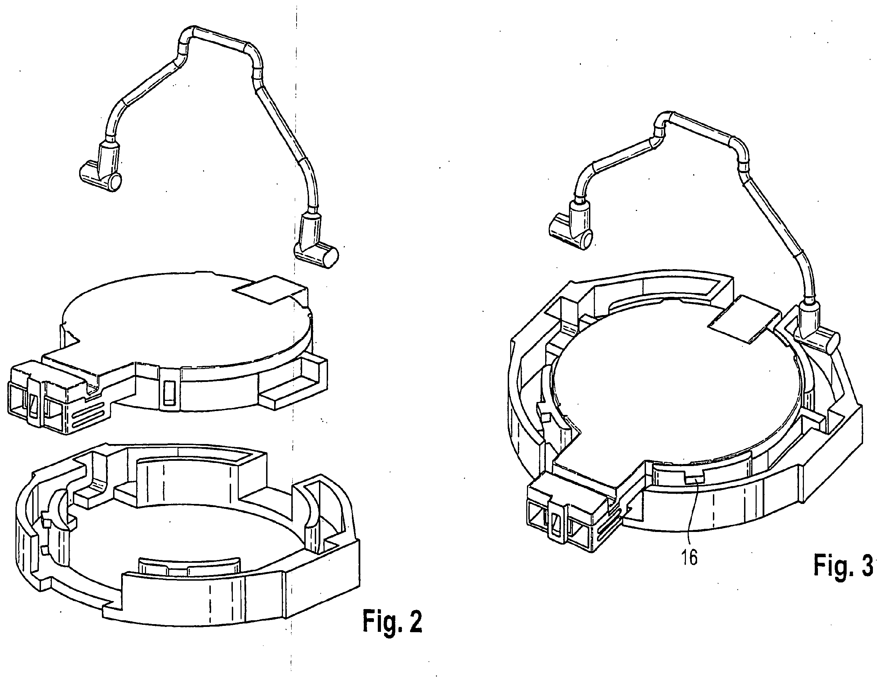

Zur Montage wird der Sensor 30 in die Halterung 10, die üblicherweise bereits an einer Windschutzscheibe eines Kraftfahrzeugs angebracht ist, eingesetzt. Dabei gewährleisten der Steckanschluss 32 und der Feuchte/Temperatur-Sensor 34 zusammen mit entsprechenden Aussparungen in der Halterung 10, dass der Sensor 30 nur in einer einzigen, korrekten Ausrichtung eingesetzt werden kann (siehe Figur 3).

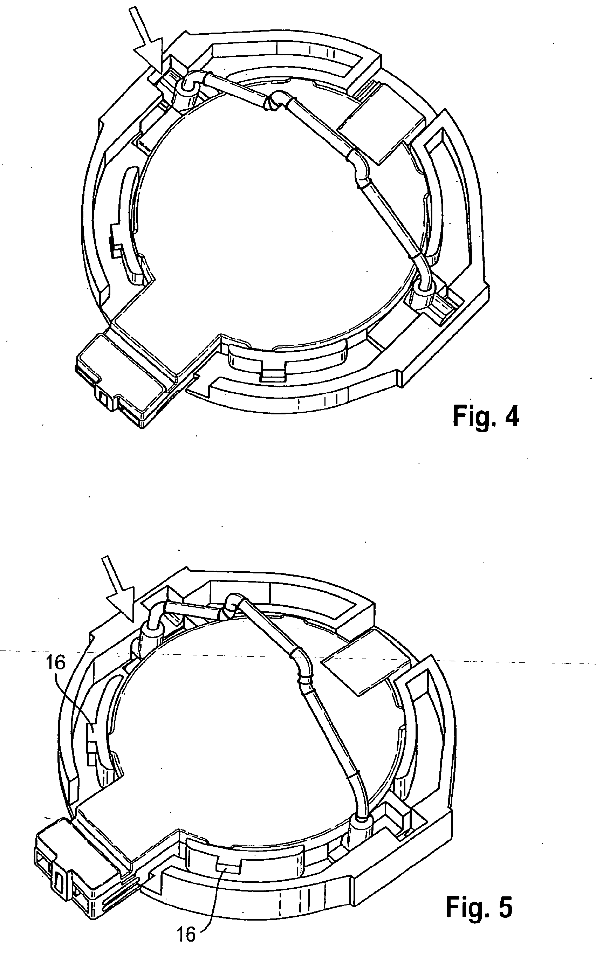

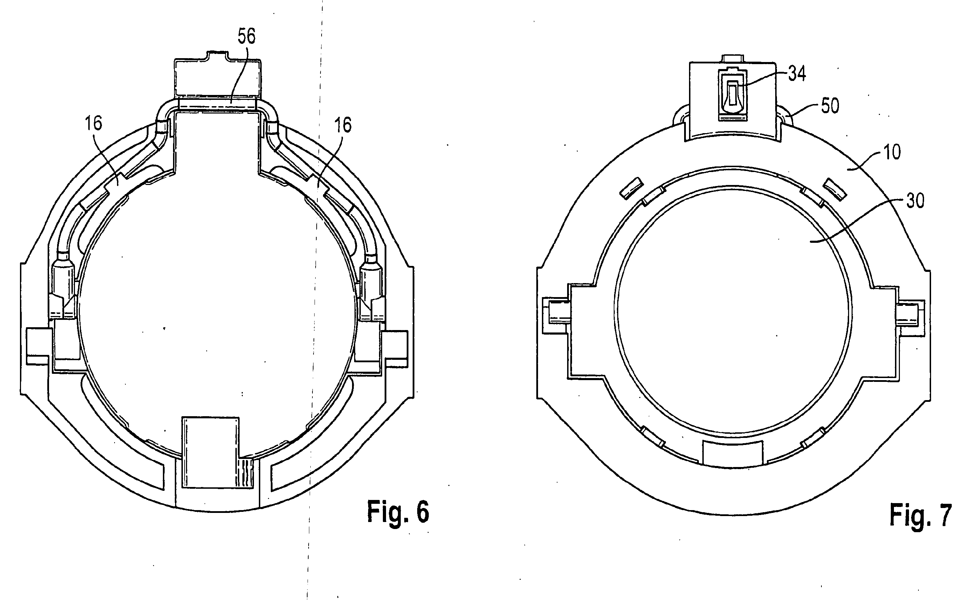

Der Klemmbügel 50 ist im Anlieferzustand am Sensor 30 vorverrastet (siehe Figur 4) und wird bei der Montage in eine korrekt verrastete Stellung (siehe Figur 5) verschoben, in welcher die Lagerachse 54 mit dem Exzenter 52 des Klemmbügels zwischen den Klemmflächen 36 und den Widerlagerflächen 12 liegen. Anschließend wird der Klemmbügel um 90° verschwenkt, so dass über den Exzenter eine Vorspannung von 30 N je Lagerstelle aufgebracht wird, mittels welcher der Sensor 30 in die Halterung 10 hineingedrückt wird. In der um 90° verschwenkten Klemmstellung (siehe Figur 6) rastet der Klemmbügel 50 hinter zwei Rastvorsprüngen 16 an der Halterung 10 ein. Im eingerasteten Zustand liegt ein als Andruckabschnitt 56 wirkender Teil des Klemmbügels 50 in einer Vertiefung im Bereich des Feuchte/Temperatur-Sensors 34 und drückt den Sensor 30 in diesem Bereich ebenfalls in Richtung zur Halterung 10 hin.

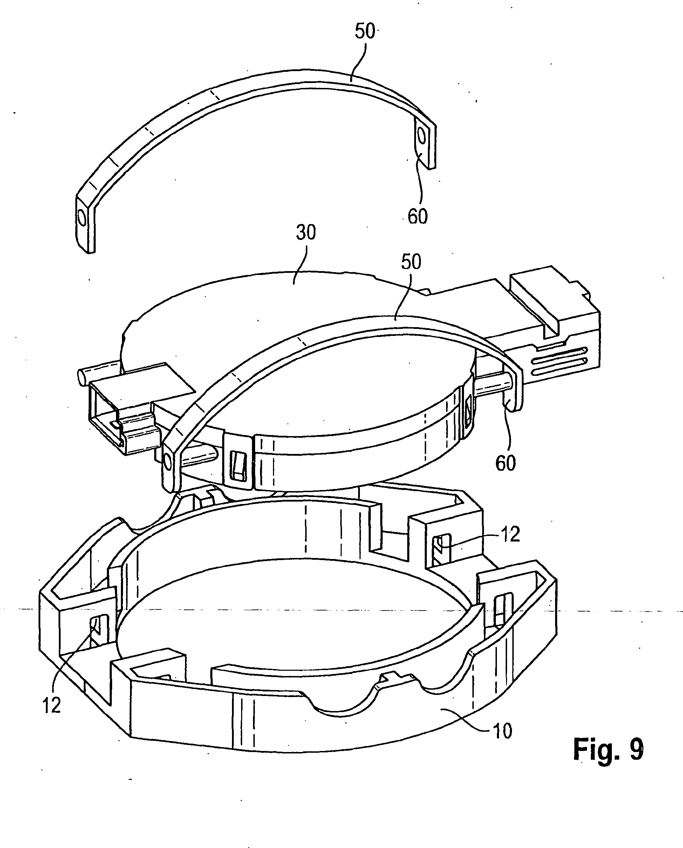

In Figur 9 ist eine Halterung gemäß einer zweiten Ausführungsform gezeigt. Der Unterschied zur ersten Ausführungsform besteht darin, dass nicht nur ein einziger Klemmbügel 50 verwendet wird, sondern zwei Klemmbügel, und dass an den Klemmbügeln 50 keine Exzenter vorgesehen sind, um die Klemmkraft aufzubringen, sondern Klemmvorsprünge 60, die jenseits der Lagerachse des Klemmbügels angeordnet sind.

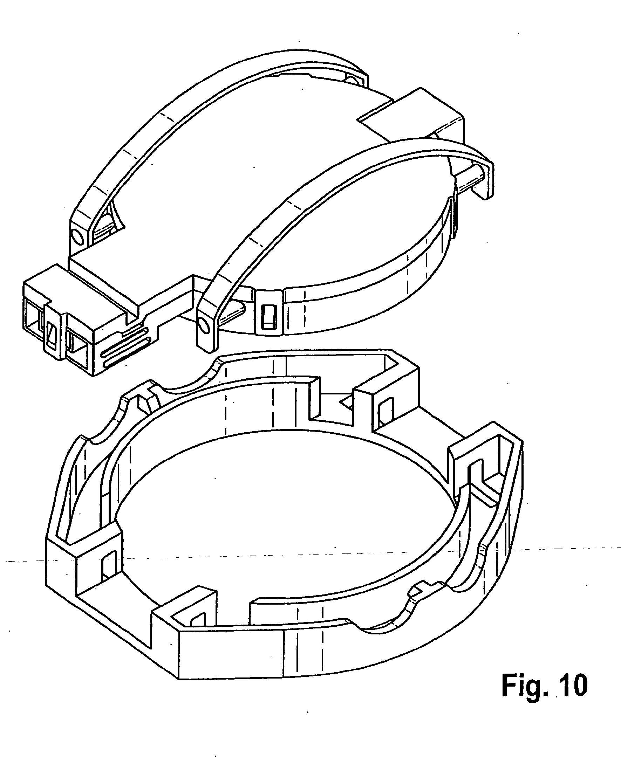

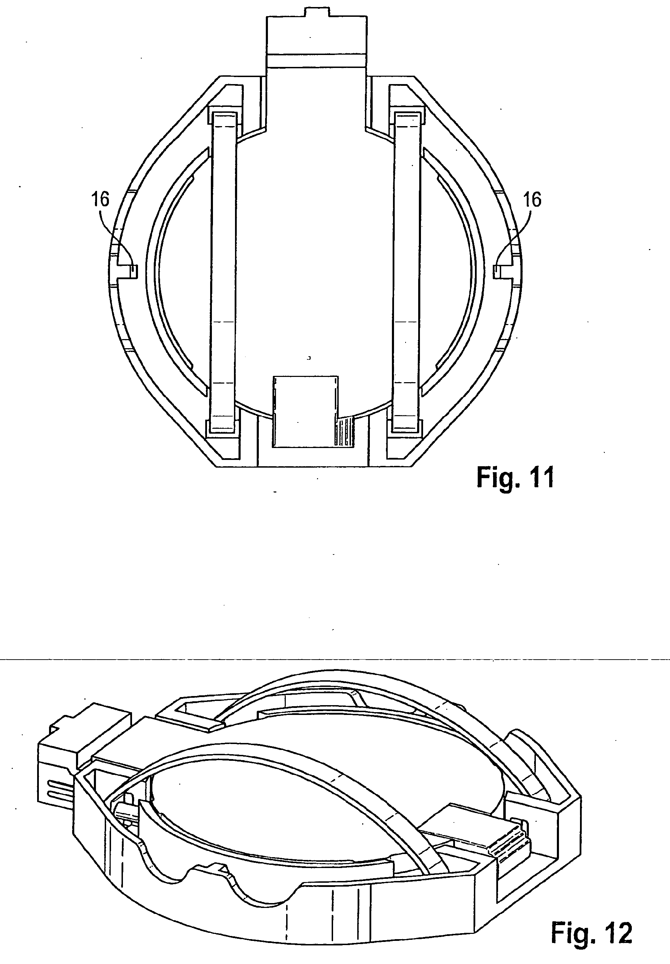

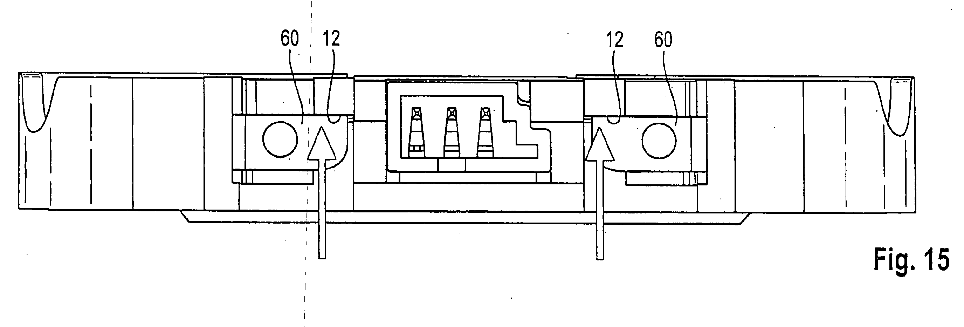

In Figur 10 ist der vormontierte Zustand gezeigt, in welchem sich die beiden Klemmbügel 50 in der Montagestellung befinden. Der Sensor 30 wird zusammen mit den beiden Klemmbügeln 50 in die Halterung 10 eingesetzt (siehe die Figuren 11 und 12), in der er über eine Clipsstelle vorverrastet. Anschließend werden die beiden Klemmbügel 50 um jeweils 90° nach außen in die Klemmstellung gebracht, in welcher die Klemmvorsprünge 60 an den Widerlagerflächen 12 der Halterung 10 angreifen und dadurch den Sensor 30 mit einer Vorspannkraft von jeweils 15 N pro Lagerstelle gegen die Halterung 10 drücken. Die Klemmbügel 50 rasten in der Klemmstellung hinter Rastvorsprüngen 16 der Halterung 10 ein. In Figur 15 sind deutlich die Klemmvorsprünge 60 zu sehen, die an den Widerlagerflächen 12 angreifen.

## Patentansprüche

1. Baugruppe mit einer Halterung (10) und einem Sensor (30), insbesondre einem Regen/Licht-Sensor für ein Kraftfahrzeug, wobei die Halterung (10) mindestens zwei Widerlager (12) für einen Klemmbügel (50) aufweist und wobei am Sensor (30) mindestens ein Klemmbügel (50) an zwei Lagerstellen schwenkbar angebracht ist, wobei der Klemmbügel (50) zwischen einer Montagestellung und einer Klemmstellung schwenkbar ist, in der er den Sensor (30) mit einer Vorspannkraft gegen die Halterung (10) beaufschlagt.

2. Baugruppe nach Anspruch 1, **dadurch gekennzeichnet, dass** der Klemmbügel (50) an seinen Enden jeweils einen Exzenter (52) aufweist.

3. Baugruppe nach Anspruch 1, **dadurch gekennzeichnet, dass** der Klemmbügel (50) an seinen Enden jeweils einen Klemmvorsprung (60) aufweist.

4. Baugruppe nach einem der vorhergehenden Ansprüche, **dadurch gekennzeichnet, dass** die Halterung (10) mit mindestens einem Rastvorsprung (16) versehen ist, hinter dem der Klemmbügel (50) in der Klemmstellung einrastet.

5. Baugruppe nach einem der vorhergehenden Ansprüche, **dadurch gekennzeichnet, dass** der Klemmbügel (50) mit einem zwischen beiden Enden mit einem Andruckabschnitt versehen ist, der sich am Sensor (30) abstützt, wenn sich der Klemmbügel (50) in der Klemmstellung befindet.

6. Baugruppe nach einem der vorhergehenden Ansprüche, **dadurch gekennzeichnet, dass** zwei einander gegenüberliegende Lagerstellen vorgesehen sind.

7. Baugruppe nach einem der Ansprüche 1 bis 5, **dadurch gekennzeichnet, dass** vier Lagerstellen vorgesehen sind, die einander paarweise gegenüberliegend angeordnet sind.

## Claims

1. An assembly comprising a mount (10) and a sensor (30), in particular a rain/light sensor for a motor vehicle, the mount (10) including at least two abutments (12) for a clamping bracket (50), and at least one clamping bracket (50) being hinge-fitted to the sensor (30) at two bearing points, the clamping bracket (50) being adapted to swivel between a mounting position and a clamping position, in which it urges the sensor (30) against the mount (10) with a pretensioning force.

2. The assembly according to claim 1, **characterized in that** the clamping bracket (50) has ends that each include an eccentric (52).

3. The assembly according to claim 1, **characterized in that** the clamping bracket (50) has ends that each include a clamping projection (60).

4. The assembly according to any of the preceding claims, **characterized in that** the mount (10) is provided with at least one locking projection (16) behind which the clamping bracket (50) snaps into place in the clamping position.

5. The assembly according to any of the preceding claims, **characterized in that** the clamping bracket (50) is provided with a contact pressure section between its two ends, which is supported by the sensor (30) when the clamping bracket (50) is in the clamping position.

6. The assembly according to any of the preceding claims, **characterized in that** two bearing points are provided opposite each other.

7. The assembly according to any of claims 1 to 5, **characterized in that** four bearing points are provided which are arranged opposite each other in pairs.

## Revendications

1. Ensemble, comportant un support (10) et un capteur (30), en particulier un capteur de pluie/de lumière pour un véhicule automobile, le support (10) présentant au moins deux butées (12) pour une bride de serrage (50), et au moins une bride de serrage (50) étant montée à pivotement sur le capteur (30) à deux points d'appui, la bride de serrage (50) étant apte à être pivotée entre une position de montage et une position de serrage dans laquelle elle sollicite le capteur (30) avec une force de précontrainte contre le support (10).

2. Ensemble selon la revendication 1, **caractérisé en ce que** la bride de serrage (50) présente un excentrique (52) à chacune de ses extrémités.

3. Ensemble selon la revendication 1, **caractérisé en ce que** la bride de serrage (50) présente une saillie de serrage (60) à chacune de ses extrémités.

4. Ensemble selon l'une des revendications précédentes, **caractérisé en ce que** le support (10) est pourvu d'au moins une saillie d'enclenchement (16) derrière laquelle s'enclenche la bride de serrage (50) dans la position de serrage.

5. Ensemble selon l'une des revendications précédentes, **caractérisé en ce que** la bride de serrage (50) est pourvue d'un tronçon d'application entre les deux extrémités, lequel prend appui sur le capteur (30) lorsque la bride de serrage (50) se trouve dans la position de serrage.

6. Ensemble selon l'une des revendications précédentes, **caractérisé en ce qu'**il est prévu deux points d'appui opposés l'un à l'autre.

7. Ensemble selon l'une des revendications 1 à 5, **caractérisé en ce qu'**il est prévu quatre points d'appui qui sont agencés par paires de façon opposée les uns aux autres.
